Europäisches Patentamt

European Patent Office

Office européen des brevets

(11) Veröffentlichungsnummer: **0 640 996 A1**

## (12) EUROPÄISCHE PATENTANMELDUNG

(21) Anmeldenummer: **94113161.7**

(22) Anmeldetag: **23.08.94**

(51) Int. Cl.6: **H01G 4/015**

(30) Priorität: **25.08.93 DE 4328615**

(43) Veröffentlichungstag der Anmeldung:
**01.03.95 Patentblatt 95/09**

(84) Benannte Vertragsstaaten:
**BE CH DE FR GB IT LI SE**

(71) Anmelder: **SIEMENS MATSUSHITA COMPONENTS GmbH & CO KG**
**Balanstrasse 73,**
**Postfach 80 17 09**
**D-81617 München (DE)**

(72) Erfinder: **Vetter, Harald, Dipl.-Ing.**
**Wichernweg 5**
**D-89520 Heidenheim (DE)**

(74) Vertreter: **Fuchs, Franz-Josef, Dr.-Ing. et al**
**Postfach 22 13 17**
**D-80503 München (DE)**

(54) **Elektrischer Kondensator.**

(57) Ein elektrischer Kondensator weist zwei aufgewickelte und mit Metallschichten versehene Kunststoffolien auf, die aufeinander entgegengesetzten Längsseiten mit metallfreien Randstreifen versehen sind. Die Metallschichten einer Folie (1) sind durch metallfreie Zonen (6) in einzelne Segmente (2) unterteilt und weisen im Randbereich einen durchgehend metallisierten Randstreifen (3) auf. Zwischen dem durchgehend metallisierten Randstreifen (3) und den einzelnen Segmenten (2) sind je Segment zwei bis fünf Sicherungsengstellen (4) angeordnet, deren Seitenverhältnis b/s von Breite b zu Abstand s zwischen 0,4 und 1,4 mm/mm beträgt.

FIG 1

EP 0 640 996 A1

Die Erfindung betrifft einen elektrischen Kondensator, insbesondere Leistungskondensator, der zwei aufgewickelte und mit Metallschichten versehene Kunststoffolien aufweist, die auf einander entgegengesetzten Längsseiten mit metallfreien Randstreifen versehen sind und bei denen die Metallschichten an den Stirnseiten des Wickels mit flammgespritzten Schoopschichten kontaktiert sind, bei dem die Metallschichten einer Folie durch metallfreie Zonen in einzelne Segmente unterteilt sind, bei dem die Metallschichten im Randbereich, der mit der Schoopschicht kontaktiert ist, einen durchgehend metallisierten Randstreifen besitzen, und bei dem zwischen dem metallischen Randstreifen und den einzelnen Segmenten Sicherungsengstellen angeordnet sind.

Ein derartiger Kondensator ist aus der EP 0 061 081 B1 bekannt. Dort bestehen die Sicherungselemente aus kleinen, parallel zur Kontaktzone verlaufenden, quadratischen Flächenelementen, wobei die Sicherungselemente und auch die Segmente der Teilkapazitätsflächen scharfe Ecken aufweisen. Die Angabe einer Bandbreite von zwei bis 75 % für den Anteil der Strompfade an der gesamten Strukturbreite überstreicht einen zu großen Bereich um im Einzelfall eine ausreichende Betriebssicherheit zu gewährleisten. Die aufgeführten Versuchsergebnisse geben nur Ausführungsbeispiele für reine Wechselspannungsanwendungen, während für Gleichspannungsanwendungen mit oder ohne Wechselspannungsanteil keine Angaben gemacht sind.

Weiterhin sind aus dem Stand der Technik eine Reihe von Kondensatoren bekannt, bei denen im Kurzschluß- bzw. Überlastungsfall einzelne Teilsegmente abgeschaltet werden können.

So ist aus der DE-PS 72 32 91 ein elektrostatischer Wickel- oder Schichtkondensator bekannt, bei dem das allgemein bekannte Prinzip der Elektrotechnik, nämlich Schmelzsicherungen zur Abschaltung von ersetzbaren Teilen zu verwenden, in denen ein Kurzschluß entstanden ist, so umgestaltet wurde, daß bei Ausfall von nicht auswechselbaren Teilen des Kondensators dieser weiterhin betrieben werden sollte. Dazu ist mindestens eine der durch Metallisierung auf das Dielektrikum aufgebauten Kondensatorbelegungen in eine Anzahl einzelner, elektrisch parallel geschalteter Metallflächen bzw. Teilkondensatoren unterteilt, von denen jede über eine Abschmelzstelle unmittelbar mit einem gemeinsamen Randstreifen (Kontaktzone) verbunden ist. Eine Fülle von verschiedenen Strukturmustern unterschiedlich angebundener Metallflächen werden beschrieben. Es fehlt jedoch eine Angabe zur Dimensionierung der Größe dieser Kondensatorflächen, um eine sichere Selbstheilung im Einzelfall zu gewährleisten. Es ist auch kein Hinweis über die notwendige Geometrie der Sicherungsengstellen angegeben. Die Teilkapazitätsflächensicherungselemente sind scharfkantig ausgeführt.

In der DE-PS 71 43 65 ist ein Kondensator beschrieben, dessen Metallbelag so dünn ist, daß er bei einem Durchschlag an oder in der Nähe der Durchschlagstelle wegbrennt. Obgleich hier vergleichbare Strukturen zur vorstehend genannten Patentschrift angeführt sind, stellen die Zuleitungen aber keine Schmelzsicherungen dar, sondern dienen als Vorwiderstand dazu, um den Durchschlagsstrom soweit zu begrenzen, daß das Dielektrikum nicht gefährdet wird. Bezüglich der Flächendimensionierung ist dieser Kondensator unabgegrenzt. Ausgeprägte Vorwiderstände sind ungünstig, da sie den Verlustfaktor steigern. Versuche haben gezeigt, daß auch relativ kleine Kondensatorflächen ausreichend hohe Energieinhalte zur Verfügung stellen können um einen nicht selbstheilenden Durchschlag zu initiieren. Der aufgezeigte Vorwiderstand ist demnach nicht alleine ausreichend um Durchschläge im praktischen Betrieb zu vermeiden.

In der einen Kondensator betreffenden DE-PS 75 84 23 ist angeführt, daß bei nicht genau übereinanderliegenden, aktiven Flächenelementen Kapazität verloren geht und die Ausheilfähigkeit durch undefiniert zur Verfügung stehende Energiemengen erschwert ist. Deshalb wird dort nur eine der metallisierten Folien strukturiert und gefordert, daß innerhalb eines definierten Teileelements soviel Energie bereitsteht, daß eine sichere Selbstheilung gewährleistet ist. Demnach ist die aus dem vorstehenden Stand der Technik angeführte Vorwiderstandstheorie nicht ausreichend, um Durchschläge zu vermindern. Ein Dimensionierungshinweis für Teilkapazitätsgröße und die Sicherungselementegeometrie wird nicht gegeben. Ferner sind die Teilkapazitätsflächen und Sicherungselemente ebenfalls scharfkantig ausgeführt.

Weiterhin wird in der DE-PS 89 12 98, die einen elektrischen Wickelkondensator betrifft, die Schwierigkeit dargestellt, daß einerseits die im Kondensator gespeicherte Energie mit dem Quadrat der angelegten Spannung steigt, andererseits aber die zum sauberen Ausbrennen der Kondensatorbeläge erforderliche Energie bei weitem nicht im gleichen Maß zunimmt. Um die Schwierigkeit zu umgehen, entsprechend der Bandbreite der Einsatzbedingungen geeignete Teilkapazitäten dimensionieren zu müssen, hat man versucht, eine Struktur mit im Vergleich zum früheren Stand der Technik sehr großen Anzahl von kleinen Flächen zu erzeugen, die mit winzigen Stegen verbunden sind. Der Vorteil dieser Vorgehensweise wurde in der leichten Herstellbarkeit und in der "selbstdimensionierenden" Struktur gesehen. Bevorzugt wurden Dreieck-, Rauten- und Rechteckflächen. Der vorgeschlagene Lösungsweg verdeutlicht die Schwierigkeit, eine den Einsatzbedingungen angepaßte funktionstüchtige Dimensionierung der Teilkapazitätsgröße vorzunehmen. Versuche haben gezeigt, daß durch diese Art der Strukturierung die Regenerierfähigkeit im Einzelfall versagt, insbesondere bei hohen Kondensatortemperaturen, d. h. daß der "Selbstdimensionierungseffekt" nicht mit einer ausreichend kleinen Fehlerrate funktioniert.

In der einen elektrischen Kondensator mit ausbrennfähigen Metallbelegungen betreffenden DE-PS 86 78 88 wird vorgeschlagen, durch eine keilförmige Metallisierung die Impulsfestigkeit zu steigern und die Stromwärme positiv zu beeinflussen. Gleichzeitig wird neben den bekannten Strukturen auch eine Aufteilung der metallisierten Fläche in kleine Teilbereiche dargestellt, die über dem Stromfluß angepaßte Sicherungsengstellen miteinander verbunden sind. Eine Dimensionierung der Teilkapazitätsgrößen fehlt, wobei die Teilkapazitätsflächen wieder mit scharfen Ecken ausgebildet sind.

In der DE-PS 87 62 74 wird ein elektrischer Kondensator mit mindestens einer ausbrennfähigen Belegung beschrieben, der eine Kammstruktur aufzeigt, die über eine mittige Engstelle eingespeist wird. Die Kammstruktur ist in einem Winkel von 45° angeordnet. Durch diese Geometrie werden teilweise ausgeprägte Spitzen an den Flächenecken und Freistreifen vorgegeben. Die Größe der Teilkapazitätfläche und der angedeuteten Sicherungsengstelle wird nicht erklärt.

In der US 32 48 619 ist eine Kondensatorkonstruktion mit metallisierten Elektroden beschrieben, bei der die Strukturierung eines Impulskondensators mit innerer Reihenschaltung und keilförmiger Metallisierung dargestellt ist. Die Kammstruktur ist rechtwinklig zur Laufrichtung scharfkantig, wobei die Teilkapazitätflächen nicht dimensioniert und ohne Sicherung ausgeführt sind.

In der EP 0 017 556 A1 wird eine Kammstruktur analog zur DE-PS 87 62 74 aufgezeigt. Die Stege sind rechtwinklig zur Laufrichtung angeordnet. Eine Portionierung der Kammstruktur in zusätzliche Teilflächen entsprechend der DE-PS 86 78 88 wird beansprucht, wobei die Strukturierung durch einen Laser ausgeführt wird. Für Polypropylen und Polyester soll der Energieinhalt der Teilkapazitäten bei Maximalspannung maximal 40 mWs betragen, wobei innerhalb der Teilflächen der Kammstruktur ein Energieinhalt von vorzugsweise 19 mWs angegeben ist. Somit überstreicht die Bandbreite des vorgeschlagenen Energieinhalts der Teilkapazitätsflächen einen Bereich zwischen 1 bis 40 mWs bei einer Stromtorgröße zwischen 1 bis 5 mm. Ein im Einzelfall ausreichend sichere Funktion kann mit dieser unscharfen Angabe nicht gewährleistet werden. Durch den Einsatz des Lasers treten weiterhin sehr scharfe Spitzen an den Kanten und Ecken der Teilkapazitätsflächen auf, die eine optimale Auslastung des Dielektrikums verhindern.

In der EP 0 032 738 A2 wird eine strukturierte Metallisierung vorzugsweise für kleine, geschichtete Kondensatoren aufgezeigt. Die Untersuchungen hatten das Ziel, bei Konsumelektronikkondensatoren die Brandgefahr insbesondere bei längerer Belastung sicher zu verhindern. Spätere Versuche haben gezeigt, daß die Dimensionierungsangaben für die Segmentierung L/W < 2,0 und Versatz "d" zwischen 0,1 und 1,0 mm bei einseitig durchgehender Kammstruktur bis zur Kontaktierung nicht problemlos funktioniert haben. Die Struktur ist rechtwinklig und scharfkantig ausgeführt.

In der EP 0 056 010 wurden an Kammstrukturen weiterführende Lebensdauer- und Sicherheitstests durchgeführt. Dabei wurde eine minimale Freistreifenbreite von 400 Veff/mm, ein maximaler Querstreifenabstand von 500 mm und eine Sicherungsstegbreite von ≤ 1/10 des maximalen Querstreifenabstandes ermittelt. Eine Dimensionierungsregel für die Strukturierung wird auch in dieser Schrift nicht angegeben. Die Struktur ist rechtwinklig und scharfkantig ausgeführt.

In der EP 0 225 822 B1 wird eine laserstrukturierte Folie aufgezeigt, die in innerer Reihenschaltung mit T-Struktur aufgebaut ist. Die Stromtore sind in der randverstärkten Zone platziert. Bei Ansprechen einer Stromsicherung in der aufgezeigten Ausführung und sonst gleichen Randbedingungen ist der Energieumsatz hauptsächlich proportional zum Sicherungswiderstand mit dem Ergebnis, daß die Stromtore bei gleicher Ansprechcharakteristik entsprechend schmal ausgeführt werden müssen. Grundsätzlich sollen aber die Sicherungsengstellen in der Größenordnung der Schichtdicke des regenerierfähigen Belages ausgeführt werden, um schädliche Graphitbelegungen infolge Stoffzersetzung des Trägermaterials zu vermeiden. Es ist zumindest fraglich, ob diese Angaben geeignet sind, einen funktionsfähigen Kondensator herzustellen. Ferner ist eine Dimensionierungskenngröße über den bekannten Rahmen hinaus nicht angegeben. Die Teilkapazitätsflächen sind ebenso wie die Freistreifen scharfkantig ausgeführt.

In der EP 0 243 288 B1 wird eine bis zur randverstärkten Randzone ausgebildete Kammstruktur aufgezeigt. Am Beginn der Randverstärkung wird in Laufrichtung ein verdünnter Belag erzeugt, der als Sicherung dienen soll. Die stark unterschiedlichen Schichtdicken sind allerdings schwierig herzustellen, und es besteht das Problem der schlecht beherrschbaren Schichtdickentoleranz. Es werden keine Angaben zur Dimensionierung der Teilkapazitäten gemacht. Die Teilkapazitätsflächen sind scharfkantig ausgeführt. Orientierende Versuche haben gezeigt, daß Durchschläge mit dieser Strukturvariante nicht ausrechend sicher verhindert werden können.

Schließlich ist in der EP 0 450 455 A2 eine Struktur mit relativ kleinen Flächenelementen (Quadrat-, Rechteck-, Dreieck-, Sechseckflächen) beschrieben, die von gestreckten oder abgerundeten Schlitzen fast umschlossen werden und durch zwischen den Enden der Schlitze verbliebene relativ schmale Brücken mit benachbarten Flächenelementen verbunden sind. Im Gegensatz zur DE-PS 89 12 98 werden die kleinen Teilflächen mit abgerundeten Schlitzen umschlossen. Die Schwierigkeit, eine den jeweiligen Einsatzbedingungen optimal angepaßte Teilflächengröße zu bestimmen, soll auch hier durch die Auflösung in kleine Teilflächen überwunden werden. Eine wirkungsvolle Feldstärkenreduzierung bei dem, durch die notwendigerweise geringe Schlitzbreite begrenzten Radius ist zumindest fraglich. Der Verlust an aktiver Fläche ist bei dieser Strukturierung relativ groß.

Der oben abgehandelte Stand der Technik betrifft regenerierfähige Kondensatoren. Nicht regenerierfähige Kondensatoren liegen ab einer Belegungsschichtdicke d > 80 nm vor. In der Regel werden aber als Belegungen wesentlich dickere Metallfolien mit Starken von 4 bis 6 $\mu$m verwendet. Diese Metallfolien werden mit dem Messer oder auch durch Laser (teuer) getrennt. Es sind seit langem Kondensatoren bekannt, bei denen die beiden Belegungen in einer Anzahl von Metallfolienzungen unterteilt wurden. Die verwendeten Zungen waren verhältnismäßig breit und konnten deshalb keineswegs als Abschmelzstege dienen. Derzeit werden bei nicht selbstheilenden Folienkondensatoren Sicherungen an jeden einzelnen Flach- bzw. Rundwickel in Form einer oder mehrerer Schmelzdrähte angebracht. Im Fehlerfall schmilzt die Drahtsicherung und trennt den Wickel vom Restkondensator ab. Diese allgemein bekannte Vorgehensweise hat aber den Nachteil, daß im Fehlerfall zumindest ein kompletter Wickel herausgetrennt wird, ggf. verbundenen mit einer unerwünschten Deformation des Gehäuses. Die im Stand der Technik seit langem bekannte Möglichkeit, durch Einsatz von in Laufrichtung getrennte Metallfolienstücken nur Teilkapazitäten aus dem Wickel herauszutrennen, hat sich offensichtlich nicht bewährt. Ein weiterer Nachteil dieser Kondensatortechnologie ist das verhältnismäßig hohe Eigengewicht durch die eingesetzte Metallfolie, verbunden mit der notwendigen Ölimprägnierung. Die derzeit übliche Metallfoliendicke von z. B. 5 $\mu$m ist für die Funktion des Kondensators bei weitem nicht notwendig, sondern nur durch die wirtschaftliche Herstellung der Metallfolie bestimmt.

Aufgabe der vorliegenden Erfindung ist es daher, den eingangs angeführten Kondensator derart weiterzubilden, daß er eine Metallisierungsstruktur zur Verbesserung der Spanungsfestigkeit aufzeigt, die zusätzlich bei kurzzeitiger Überlastung den Totalverlust des Wickels verhindert und wesentlich dazu beiträgt, im Fehlerfall unerwünschte Deformationen des Gehäuses - mit oder ohne Überdruckabreißsicherung - zu vermeiden und sowohl für regenerierfähige als auch für nicht regenerierfähige Leistungskondensatoren geeignet ist, wobei im Fall einer nicht selbstheilenden ölimprägnierten Kondensatortechnologie eine erhebliche Gewichtseinsparung bei gleicher Funktion erreicht und auch die Möglichkeit des Einsatzes bei einer trockenen Bauweise mit dem Ziel gegeben ist, zusätzlich Gewicht einzusparen.

Diese Aufgabe wird erfindungsgemäß dadurch gelöst, daß die Anzahl n der Sicherungsengstellen je Segment 1 < n < 6 beträgt und daß die Sicherungsengstellen ein Seitenverhältnis b/s von Breite b zu Abstand s von 0,4 < b/s < 1,4 mm/mm besitzen.

Vorzugsweise besitzen die Sicherungsengstellen ein Seitenverhältnis b/s von 0,5 < b/s < 1,0 mm/mm.

Gemäß einer Weiterbildung weisen die Ecken der Sicherungsengstellen abgerundete Anschlußradien r mit einem Schlagweiten/Radiusverhältnis k/r von 0,5 < k/r < 10 mm/mm bzw. einem Inhomogenitätsgrad i 1,10 < i < 2,50 kV/mm/kV/mm auf.

Der Abstand e der Einzelsegmente beträgt 0,5 < e < 1,5, vorzugsweise 0,8 < e < 1,25 mm, wobei die Metallschichtdicke d der Sicherungsengstellen 10 < d < 100, vorzugsweise 15 < d < 30 nm beträgt.

Die Sicherungsengstellen sind vorzugsweise im Freirandbereich der zweiten durchgehend metallisierten Folie angeordnet.

Ferner kann der durchgehend metallisierte Randstreifen eine größere Schichtdicke als die Metallschichten im aktiven Kondensatorteil aufweisen. Die Metallschichten bestehen vorzugsweise aus Aluminium oder einer Legierung von Aluminium mit Zink, während die Kunststoffolien aus den im Kondensatorbau eingesetzten Werkstoffen, z. B. Polypropylen, Polycarbonat, Polyester, Polysulfon usw. bestehen.

Zumindest eine Kunststoffolie kann einen im Freirandbereich angeordneten Wellenschnitt aufweisen.

Die metallfreien Zonen zwischen den Einzelsegmenten enden bevorzugt in den zwischen den Sicherungsengstellen angeordneten metallfreien Bereichen.

Weitere Ausgestaltungen des Gegenstandes der Erfindung sind in weiteren Unteransprüchen angeführt.

Die Erfindung wird anhand der folgenden Ausführungsbeispiele näher erläutert.

In der dazugehörenden Zeichnung zeigen

FIG 1     eine Folie mit Metallstrukturierung und Sicherungsengstellen,

FIG 2     einen vergrößerten Ausschnitt aus FIG 1,

FIG 3     einen Schnitt durch die Folie nach FIG 1,

FIG 4     die Sicherungslänge s als Funktion der Foliendicke d bei konstantem, flächenbezogenem Energieumsatz der Sicherung für eine verschieden große Anzahl von Sicherungsengstellen n,

FIG 5 den Inhomogenitätsgrad i als Funktion des Anschlußradius r bei verschiedenen Schlagweiten k,

FIG 6 die Breite B der Einzelsegmente als Funktion der Foliendicke D in Abhängigkeit von der relativen Überdeckung ü,

FIG 7 den Kapazitätsabbau als Funktion der relativen Spannungsbelastung bei unterschiedlichen Kondensatoren,

FIG 8 eine weitere Folie mit strukturiertem Belag bei innerer Reihenschaltung und

FIG 9 eine weitere Ausgestaltung der Strukturierung bei Ausführung ohne innere Reihenschaltung und großer Wickelbreite.

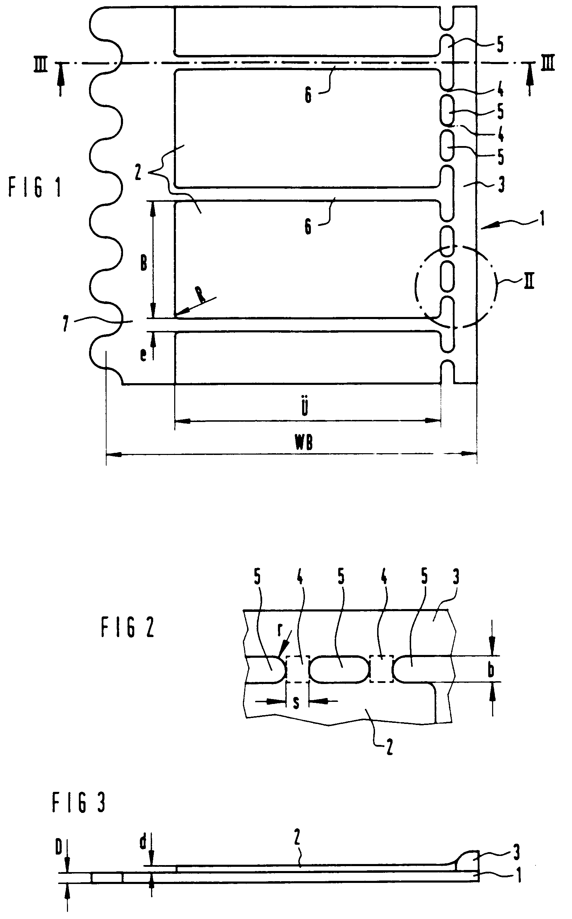

In der FIG 1 ist eine Kunststoffolie 1 dargestellt, die eine strukturierte Metallisierung aufweist, die aus Teilsegmenten 2 besteht, die eine Breite B besitzen und im Abstand e voneinander angeordnet sind. Im einen Randbereich, in dem der später hergestellte Wickelkondensator durch eine Schoopschicht kontaktiert wird, ist ein durchgehender Metallstreifen 3 angeordnet. Zwischen dem durchgehend metallisierten Randstreifen 3 und den einzelnen Teilsegmenten 2 befinden sich Sicherungsengstellen 4, die durch entmetallisierte Bereiche 5 zwischen dem durchgehend metallisiertem Randstreifen 3 und den Einzelsegmenten 2 gebildet werden. Die metallfreien Zonen 6 zwischen den Teilsegmenten 2 enden vorzugsweise in den entmetallisierten Teilbereichen 5.

Auf der dem durchgehend metallisierten Randstreifen 3 gegenüberliegenden Längsseite der Folie 1 befindet sich ein nichtmetallisierter Freirandbereich 7, der einen Wellenschnitt aufweist, so daß sich eine mittlere Wickelbreite WB ergibt.

Die metallisierten Einzelsegmente 2, die im fertigen Kondensator die Teilkapazitäten bilden, weisen an ihren an die metallfreien Zonen 6 bzw. 7 angrenzenden Bereichen abgerundete Ecken mit dem Radius R auf, der dem weiter unten erläuterten Anschlußradius r entspricht, d.h. R = r .

Als Gegenelektrode dient eine durchgehend metallisierte zweite Kunststoffolie, die ihren Freirandbereich auf der der FIG 1 entsprechenden rechten Seite, also im Bereich der Sicherungsengstellen 4, aufweist und die an ihrer der FIG 1 entsprechenden linken Seite im fertigen Kondensator mit einer Schoopschicht kontaktiert ist.

In der FIG 2 ist ein vergrößerter Randbereich der FIG 1 dargestellt, aus der ersichtlich ist, daß die Sicherungsengstellen 4 eine Breite b und einen Abstand s voneinander aufweisen. Gegenüber den metallfreien Bereichen 5 weisen die Sicherungsengstellen 4 Abrundungen mit dem Radius r auf.

FIG 3 zeigt einen Querschnitt durch die in FIG 1 dargestellte Kunststoffolie 1 aus dem ersichtlich ist, daß der durchgehend metallisierte Randstreifen 3 eine größere Dicke als die Metallschichten der Einzelsegmente 2 besitzt.

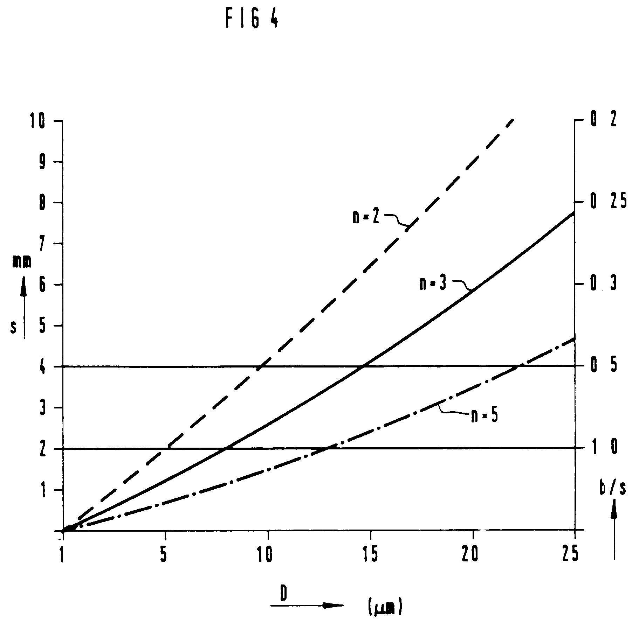

Die Anzahl n der Sicherungsengstellen 4 je Teilsegment 2 beträgt 1 < n < 6, d. h. zwei bis fünf Sicherungsengstellen 4. Die eingeschriebenen Flächenelemente der Sicherungsengstelle haben ein Seitenverhältnis b/s in mm/mm von 0,4 < b/s < 1,4, vorzugsweise 0,5 < b/s < 1,0 wie es in der FIG 4 dargestellt ist.

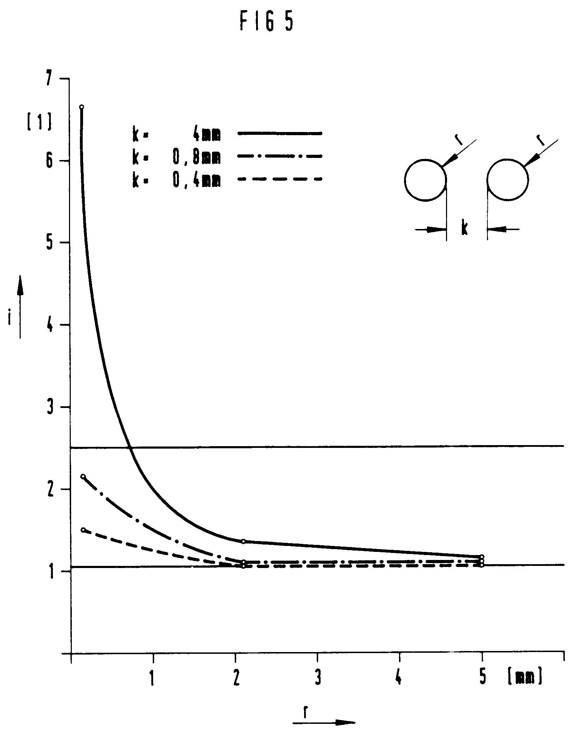

Alle Sicherungselemente 4 erhalten Anschlußradien r mit einem Schlagweiten/Radiusverhältnis k/r in mm/mm von 0,5 < k/r < 10 entsprechend einem Inhomogenitätsgrad i ($E_{max}/E_{min}$) in kV/mm/kV/mm von 1,16 < i < 2,50, wie es in der FIG 5 für verschiedene Schlagweiten k dargestellt ist.

Die Dimensionierung der Sicherungsengstelle 4 orientiert sich an der Optimierungsforderung: umgesetzte Verdampfungsenergie der Sicherung/Flächeneinheit der Sicherung und Metallisierungsschichtdicke = konstant. Die umgesetzte Verdampfungsenergie der Sicherung je Flächeneinheit der Sicherung und Metallisierungsschichtdicke E/A.d in $\mu$Ws/mm$^2$.nm liegt im Bereich:

9 < E/A.d < 20 für Zn/Al-Metallisierung und

40 < E/A.d < 90 für Al-Metallisierung.

Die Metallisierungsschichtdicke liegt im Bereich zwischen 10 und 100, vorzugsweise 15 und 30 nm. Die Bestimmungsgleichung für den Energieumsatz $E_{si}$/mWs einer Schmelzsicherung mit dem prospektiven Strom $I_p$/A der virtuellen Schmelzzeit $t_{mV}$/$\mu$s und dem Widerstand $R_{si}$/$\Omega$ lautet:

(1) $\qquad E_{si} = I_p^2 . t_{mV} . R_{si}.$

Setzt man die relevanten Versuchsdaten einer Teilkapazität $C_{TCn}$ in (1) ein, ergibt sich für die Sicherungslänge s(mm) einer Kondensatorbaureihe bei Segmentbreiten B (mm), konstanter Sicherungsbreite b(mm) und konstanter Anzahl n von Sicherungsengstellen 4 ein funktionaler Zusammenhang entsprechend Figur 4.

Die notwendige Impulsbelastbarkeit der Teilkondensatoren in der Kontaktzone wird ggf. durch eine Randverstärkung der durchgehenden Metallisierung 3 in Kombination mit einem Wellenschnitt erreicht.

Die Dimensionierung der Teilkapazitäten orientiert sich an der minimalen erforderlichen Regenerierenergie bei voller Auslastung des Dielektrikums unter Betriebsbedingungen. Die Gesamtenergiebilanz eines Selbstheildurchschlags in organischen Dielektrika hängt in komplizierter Weise von elektrischen und physikalisch-chemischen Vorgängen ab, die meßtechnisch nicht exakt erfaßbar sind.

Über ein Rechenmodell kann die raum-zeitliche Verteilung von Potential, Strom im Plasma des Durchschlags, die Gasbildung infolge Stoffzersetzung, die daraus resultierende Graphitbelegung und die Isolierhofgröße beschrieben werden. Mit den Radien ri, ra, r2, r, dem Radienelement dr, dem Strom I, dem Spannungselement dU, der Wickelmaterialkonstanten M und dem Luftspalt L zwischen den Folien gilt:

(2) $\quad {}_{ri}\int^{ra} .I.(r2,r).dU(r2,r)/dr = f(M,L).$

Die quantitative Berechnung erfordert einen ungewöhnlich hohen Rechenaufwand, da infolge vielfältiger Parameterverknüpfungen nur mit simultan ablaufenden Programmen die Lösung der Differentialgleichung (d.h. der Maximalradius ra des Isolierhofs) gefunden werden kann. Unterstellt man zur Vereinfachung die Wickelmaterialkonstanten M und den Luftspalt L einer Kondensatorbaureihe als konstant, kann durch das eingeführte Optimierungskriterium "minimal erforderliche Regenerierenergie bei sicherer Selbstheilung "mit überschaubarem Aufwand und ohne wesentlichen Präzisionsverlust des Berechnungsergebnisses gearbeitet werden. Das oben angeführte Optimierungskriterium wird durch zusätzliches Einführen eines notwendigen Isolierabstandes ri (mm) zwischen den Durchschlagskanal und dem Außendurchmesser des Regenerierhofs berechenbar. Der Abstand folgt aus der Dimensionierungsspannung $U_{max}$(kV) und der Isolierkonstante $k_i$-(kV/mm). Durch Versuche konnte $k_i$ im betrachteten Energie-Umspannungsbereich ermittelt werden und beträgt $0,5 < k_i < 1,6$ vorzugsweise $0,8 < k_i < 1,4$.

Der Flächen- und metallisierungsschichtdickenbezogene Energieumsatz des Regeneriervorgangs $k_e$ - (Mikrowattsekunden/mm$^2$.nm) liegt bei:

$50 < k_e < 120$ für Zn/Al-Metallisierung und

$90 < k_e < 190$ für Al-Metallisierung.

Mit der Bestimmungsgleichung:

(3) $\quad E_{SH} = k.E_{TC}2.C_{TC}$

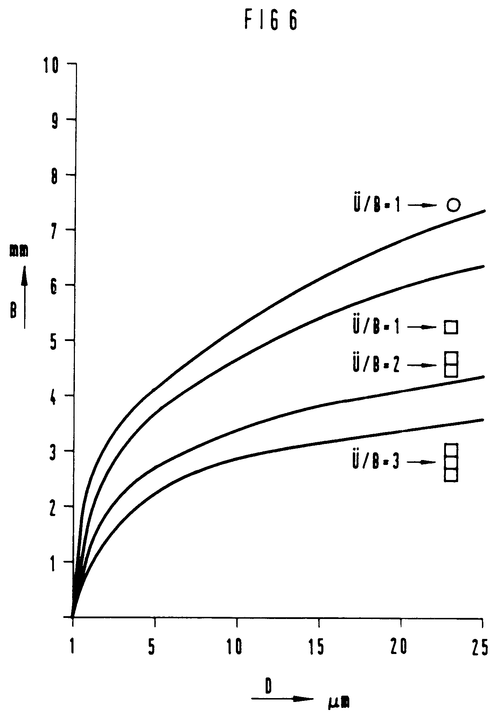

kann die Teilkapazität $C_{TC}$ bestimmt werden, wobei der Exponent $U_{max}$ implizit in $E_{TC}$ enthalten und für $C_{TC}$ ggf. bei einem konkreten dielektrischen Aufbau entsprechend der Versuche eines Referenzkondensators angepaßt werden muß, um präzisere Rechenergebnisse zu erhalten. Für Polypropylen und Polyester, in den für Leistungselektronikkondensatoren üblichen Foliendicken D und Betriebsspannungen, liegt die Bandbreite der Teilkapazitäten $C_{TC}$(nF) bei: $3 < C_{TC} < 30$, vorzugsweise $5 < C_{TC} < 21$, wobei der kleine Wert für Folien größerer Dicke und umgekehrt der größere Wert für Folien kleinerer Dicke gilt. Für die praktische Auslegung muß die Kreisfläche von $C_{TC}$ in ein Quadrat oder Rechteck in einem Seitenverhältnis Überdeckung/Segmentbreite Ü/B in mm/mm von: $0,5 < Ü/B < 6$, vorzugsweise $0,9 < Ü/B < 3,1$ umgewandelt werden (s. FIG 6).

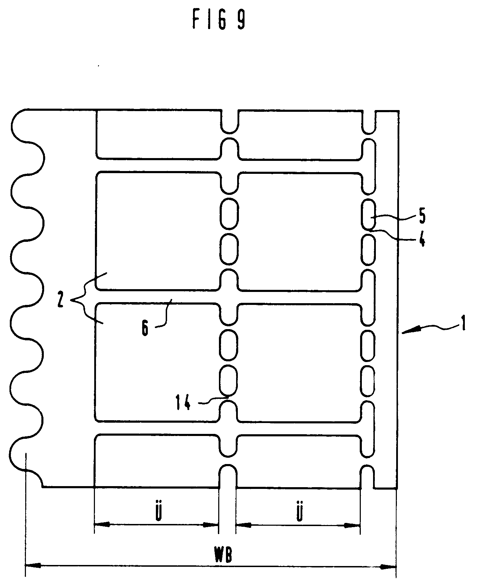

Kann aufgrund der geometrischen Forderungen einer Kondensatorbaureihe das Seitenverhältnis Ü/B nicht in der zulässigen Bandbreite realisiert werden, muß die Teilkapazitätsfläche 2 in Querrichtung durch folgerichtig dimensionierte Sicherungselemente 4 abgetrennt werden, um wieder funktionsfähige Teilkapazitäten zu erhalten, wie es in der FIG 9 dargestellt ist.

Im realen Kondensator gilt für die Dimensionsierungsspannung $U_{max}$ und die Foliendicke $D(\mu m)$ folgender funktionaler Zusammenhang:

(4) $\quad U_{max} = k.D \ 1/m,$

wobei der Exponent 1/m im Bereich $0,15 < 1/m < 0,9$ vorzugsweise $0,4 < 1/m < 0,6$ liegt.

Die Berechnung der Teilkapazität bei einem in innerer Reihenschaltung (IR) geschalteten Kondensator bzw. Wickel ergibt sich zu:

(5) $\quad U_{max} = U_{kond}/n.IR,$

da während des Durchschlags in der Teilkapazität wegen der immer vorhandenen Widerstände und Induktivitäten eine schnelle Energienachlieferung von außen so gut wie verhindert wird.

Bei nichtregenerierfähigen Kondensatoren gelten grundsätzlich die gleichen Opitimierungskriterien bezüglich der Teilkapazitätsgröße und der Sicherungsdimensionierung wie bei der selbstheilenden Technologie, wobei aber nicht der Energieumsatz der als Dimensionierungshilfsmittel angenommenen "Regeneriervorgänge" entscheidend ist (da näherungsweise im Fehlerfall der Energieinhalt der gesamten Teilkapazität umgesetzt wird), sondern hauptsächlich die Funktion der Sicherung gewährleistet werden muß.

In diesem Fall liegen die Metallisierungsschichtdicken $d/nm$ im Bereich $80 < d < 500$.

Im Fall der Sicherungsbelastung wird aus dem Wickel eine Teilkapazität herausgetrennt. Der zulässige Energieumsatz im Fehlerfall wird durch das Optimierungskriterium für die Sicherung analog zum selbstheilenden Kondensator und durch die formal gleiche Forderung bestimmt, nämlich das benachbarte Folienelement nicht bleibend zu schädigen.

Ausführungsbeispiele:

In einem Bestätigungsversuch wurden drei Prüfgruppen A, B, C mit folgenden Daten hergestellt:

| Prüfgruppe | | A | B | C |
|---|---|---|---|---|
| Kapazitätsverhältnis | $C/C1$: | 1,0 | 0,7 | 3,0 |
| Energieverhältnis | $W/W1$: | 1,0 | 1,5 | 3,0 |
| Segmentbreitenverhältnis | $B/B_1$: | 1,0 | 1,0 | 3,0 |
| Sicherungslängenverhältnis | $s/s1$: | 1,0 | 1,0 | 1,0 |

Die Prüflinge wurden einem step-test unterzogen mit einer Spannungssteigerung in 100 V-Schritten je Minute, mit folgendem Ergebnis:

Die Prüfgruppe A erreichte die Zieldaten: $dC/C < = 1\%$ bei $U > = 2,15.U_{max}$ und Selbstheilung bis $U > = 3.U_{max}$.

Die Prüfgruppe B, mit dickerer Folie zeigt bei $U = 2,15.U_{max}$ eine größere Kapazitätsabnahme als 1%, die Selbstheilung war nur bis $U < 2,9.U_{max}$ gewahrleistet. Ursache für die ungünstigeren Ergebnisse ist die im Vergleich zum Optimum leicht überlastete Sicherung.

Die Prüfgruppe C erreichte zwar noch $U > = 2,15.U_{max}$, die zulässige Kapazitätsdrift von $< = 1\%$ wurde aber deutlich überschritten. Entscheidend ist aber das Ergebnis bezüglich der Selbstheilfähigkeit, die nur bis $U = 2,3.U_{max}$ vorhanden ist. Bei dieser Prüfgruppe macht sich der erheblich zu große Energieinhalt der Teilkapazität bemerkbar. Auch eine Anpassung der Sicherungslänge s (d.h. längeres s) würde das Ergebnis wegen der zu großen Teilkapazität nicht wesentlich beeinflussen können.

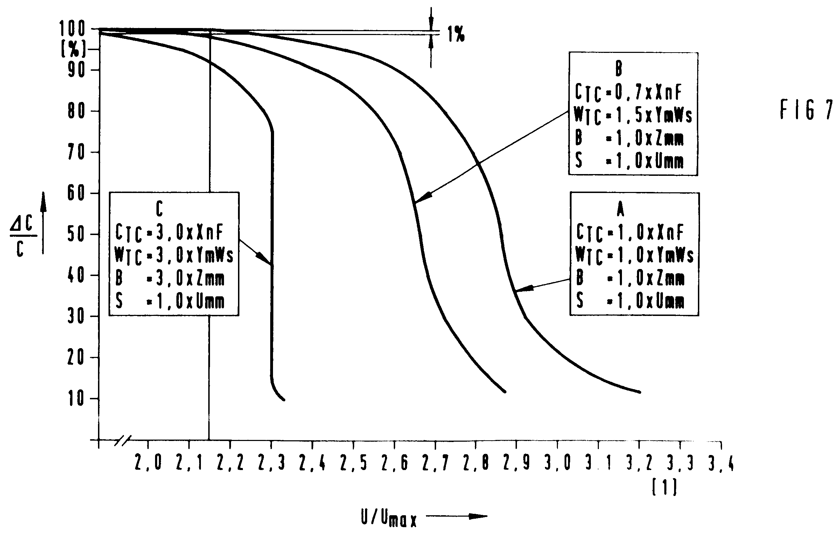

Die Ergebnisse dieser Untersuchungen sind in FIG 7 dargestellt, die den Kapazitätsabbau $\Delta C/C$ in Abhängigkeit von der relativen Spannungsbelastung $U/U_{max}$ bei den einzelnen Gruppen wiedergibt.

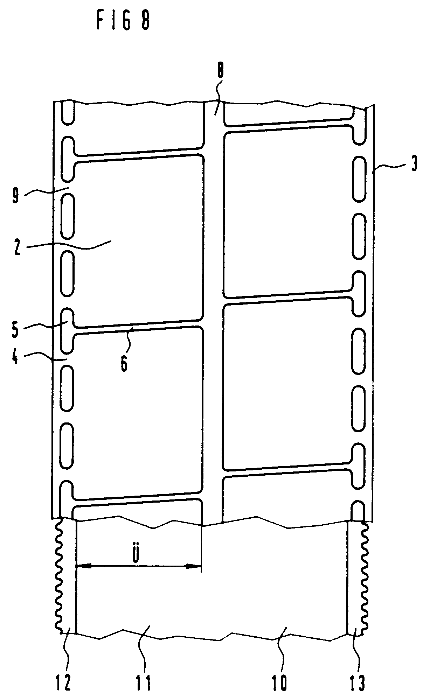

In der FIG 8 ist eine Ausführungsform mit innerer Reihenschaltung dargestellt, bei der in der Mitte ein metallfreier Streifen 8 angeordnet ist, so daß sich eine zweifache innere Reihenschaltung ergibt. Die Kunststoffolie 1 weist somit neben dem durchgehenden Metallisierungsstreifen 3 auf der rechten Seite einen weiteren durchgehenden Metallisierungsstreifen 9 auf der linken Seite auf, wobei im fertigen Wickelkondensator beide Metallisierungen 3 bzw. 9 durch Schoopschichten kontaktiert sind. Die Gegenelektrode wird durch eine Folie 10 gebildet, die eine durchgehende Metallisierung 11 mit zwei Freirandsreifen 12, 13 aufweist. Die metallfreien Freiränder 12, 13 sind mit einem Wellenschnitt versehen.

Entsprechend der FIG 8 können andere Kondensatoraufbauten mit mehrfacher innerer Reihenschaltung hergestellt werden, die dann nicht nur einen metallfreien Streifen 8, sondern mehrere derartige Streifen aufweisen, z. B. bei dreifacher innerer Reihenschaltung zwei metallfreie Streifen in Längsrichtung der Folie usw. Die Sicherungsengstellen werden dann in den Bereichen der Freistreifen gebildet.

FIG 9 zeigt eine weitere Ausführungsform, bei der zusätzliche Sicherungsengstellen 14 in den Teilsegmenten 2 angeordnet sind. Diese Ausführungsform ist für Kondensatoren großer Wickelbreite geeignet.

Die Struktur nach der Erfindung kann vorteilhafterweise in einer Bandbedampfungsanlage mit einer gemäß der aufgezeigten Struktur ausgeführten Auftragsrolle erzeugt werden, wobei vor dem Metallisieren ein Maskierungsöl auf die zu bedampfende Folienoberfläche aufgetragen wird.

Eine nach der Metallisierung durchzuführende Strukturierung mit einem Laser ist ebenfalls möglich, wenngleich die Geometrieforderungen bzgl. der Anschlußradien bei gleichzeitiger Forderung nach wirtschaftlicher Herstellung nur schwer erfüllbar sind.

Die gezeigte Strukturierung ist für alle Kondensatoren geeignet, insbesondere für Leistungskondensatoren bei Wechselspannungs- und Gleichspannungsanwendungen (mit oder ohne überlagerter Wechselspannung).

**Patentansprüche**

1. Elektrischer Kondensator, insbesondere Leistungskondensator, der zwei aufgewickelte und mit Metallschichten versehene Kunststoffolien aufweist, die auf einander entgegengesetzten Längsseiten mit metallfreien Randstreifen versehen sind, bei dem die Metallschichten an den Stirnseiten des Wickels mit flammgespritzten Schoopschichten kontaktiert sind, bei dem die Metallschichten einer Folie durch metallfreie Zonen in einzelne Segmente unterteilt sind, bei dem die Metallschichten im Randbereich, der mit der Schoopschicht kontaktiert ist, einen durchgehend metallisierten Randstreifen besitzen und bei dem zwischen dem metallisierten Randstreifen und den einzelnen Segmenten Sicherungsengstellen angeordnet sind,
   **dadurch gekennzeichnet,**
   daß die Anzahl n der Sicherungsengstellen (4) je Segment 1 < n < 6 beträgt und daß die Sicherungsengstellen (4) ein Seitenverhältnis b/s von Breite b zu Abstand s von 0,4 < b/s < 1,4 [mm/mm] besitzen.

2. Elektrischer Kondensator nach Anspruch 1,
   **dadurch gekennzeichnet,**
   daß die Sicherungsengstellen (4) ein Seitenverhältnis b/s von 0,5 < b/s < 1,0 [mm/mm] besitzen.

3. Elektrischer Kondensator nach Anspruch 1 oder 2,
   **dadurch gekennzeichnet,**
   daß die Ecken der Sicherungsengstellen (4) abgerundete Anschlußradien r mit einem Schlagweiten/Radiusverhältnis k/r von 0,5 < k/r < 10 [mm/mm] besitzen, entsprechend einem Inhomogenitätsgrad i von 1,16 < i < 2,50 [kV/mm/kV/mm].

4. Elektrischer Kondensator nach einem der Ansprüche 1 bis 3,
   **dadurch gekennzeichnet,**
   daß der Abstand e der Einzelsegmente (2) 0,5 < e < 1,5 [mm] beträgt.

5. Elektrischer Kondensator nach Anspruch 4,
   **dadurch gekennzeichnet,**
   daß der Abstand e der Einzelsegmente (2) 0,8 < e < 1,25 [mm] beträgt.

6. Elektrischer Kondensator nach einem der Ansprüche 1 bis 5,
   **dadurch gekennzeichnet,**
   daß die Metallschichtdicke d 10 < d < 80 [nm] beträgt.

7. Elektrischer Kondensator nach Anspruch 6,
   **dadurch gekennzeichnet,**
   daß die Metallschichtdicke d 10 < d < 30 [nm] beträgt.

8. Elektrischer Kondensator nach einem der Ansprüche 1 bis 5,
   **dadurch gekennzeichnet,**
   daß die Metall-Schichtdicke d 80 < d < 500 [nm] beträgt.

9. Elektrischer Kondensator nach einem der Ansprüche 1 bis 8,
   **dadurch gekennzeichnet,**
   daß die Sicherungsengstellen (4) im Freirandbereich und/oder im Bereich von Freistreifen der zweiten durchgehend metallisierten Folie (10) angeordnet sind.

10. Elektrischer Kondensator nach einem der Ansprüche 1 bis 9,
    **dadurch gekennzeichnet,**
    daß der durchgehend metallisierte Randstreifen (3) eine größere Schichtdicke als die Metallschichten im aktiven Kondensatorteil aufweist.

11. Elektrischer Kondensator nach einem der Ansprüche 1 bis 10,
    **dadurch gekennzeichnet,**
    daß die Metallschichten aus A1 oder einer Legierung von Al/Zn bestehen.

12. Elektrischer Kondensator nach einem der Ansprüche 1 bis 11,
    **dadurch gekennzeichnet,**
    daß zumindest eine Kunststoffolie (1, 10) einen im Freirandbereich (7, 12, 13) angeordneten Wellenschnitt besitzt.

13. Elektrischer Kondensator nach einem der Ansprüche 1 bis 12,
    **dadurch gekennzeichnet,**
    daß die metallfreien Zonen (6) zwischen den Einzelsegmenten (2) in zwischen den Sicherungsengstellen (4) angeordneten metallfreien Bereichen (5) enden.

14. Elektrischer Kondensator nach einem der Ansprüche 1 bis 13,
    **dadurch gekennzeichnet,**
    daß die durchgehend metallisierte Kunststoffolie (10) an beiden Seiten metallfreie Randstreifen (12, 13) besitzt, daß die zweite Kunststoffolie (1) an beiden Seiten metallisierte Randstreifen (3, 9) mit Sicherungsengstellen (4) aufweist und daß zumindest ein metallfreier Streifen (8) zwischen den beiden metallisierten Randstreifen (3, 9) angeordnet ist, so daß ein Kondensator mit innerer Reihenschaltung entsteht.

15. Elektrischer Kondensator nach einem der Ansprüche 1 bis 14,
    **dadurch gekennzeichnet,**
    daß zusätzliche Sicherungsengstellen (14) im aktiven Kondensatorteil angeordnet sind.

16. Elektrischer Kondensator nach einem der Ansprüche 1 bis 15,
    **dadurch gekennzeichnet,**
    daß die Folien (1) aus Polypropylen oder Polyester bestehen.

17. Elektrischer Kondensator nach Anspruch 16,
    **dadurch gekennzeichnet,**
    daß die Teilkapazität $C_{TC}$ der Segmente (2) $3 < C_{TC} < 30$, vorzugsweise $5 < C_{TC} < 21$, [nF] beträgt.

18. Elektrischer Kondensator nach Anspruch 16 oder 17,
    **dadurch gekennzeichnet,**
    daß das Verhältnis Ü/B $0,5 < Ü/B < 6,0$, vorzugsweise $0,9 < Ü/B < 3,1$, [mm/mm] beträgt.

19. Elektrischer Kondensator nach einem der Ansprüche 1 bis 18,
    **dadurch gekennzeichnet,**
    daß die Isolierkonstante $k_i$ $0,5 < k_i < 1,6$, vorzugsweise $0,8 < k_i$ $1,4$ [kV/mm] beträgt.

20. Elektrischer Kondensator nach Ansprüchen 6 und 11,
    **dadurch gekennzeichnet,**
    daß der Energieumsatz $k_e$ des Regenerierungsvorgangs $50 < k_e < 120$ [$\mu$Ws/mm$^2$.nm] für Zn/Al-Metallisierung oder $90 < k_e < 190$ [$\mu$Ws/mm$^2$.nm] für Al-Metallisierung beträgt.

FIG 1

FIG 2

FIG 3

FIG 4

FIG 5

# F I 6 6

FIG 7

FIG 8

## F I G 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN vol. 16, no. 381 (E-1248) 14. August 1992 & JP-A-04 123 414 (MATSUSHITA ELECTRIC IN CO) 23. April 1992 * Zusammenfassung * --- | 1,2,4-16 | H01G4/015 |
| A | PATENT ABSTRACTS OF JAPAN vol. 15, no. 444 (E-1132) 12. November 1991 & JP-A-03 188 611 (MATSUSHITA ELECTRIC IND CO) 16. August 1991 * Zusammenfassung * --- | 1,11 | |
| D,A | EP-A-0 061 081 (MATSUSHITA ELECTRIC INDUSTRIAL CO., LTD.) * Seite 1, Absatz 3 * * Abbildung 9 * --- | 1 | |
| A | PATENT ABSTRACTS OF JAPAN vol. 17, no. 415 (E-1407) 3. August 1993 & JP-A-05 082 389 (MATSUSHITA ELECTRIC IND CO LTD) 2. April 1993 * Zusammenfassung * --- | 3,10 | RECHERCHIERTE SACHGEBIETE (Int.Cl.6) H01G |
| D,A | EP-A-0 056 010 (MATSUSHITA ELECTRIC INDUSTRIAL CO., LTD.) * Zusammenfassung * * Abbildung 1 * --- | 4,5 | |
| A | FR-A-2 579 366 (L.C.C.-C.I.C.E. COMPAGNIE EUROPEENNE DE COMPOSANTS ELECTRONIQUES) * Seite 7, Zeile 34 * * Seite 8, Zeile 2 - Zeile 4 * | 6,7,16 | |
| A | --- -/-- | 18 | |

Der vorliegende Recherchenbericht wurde für alle Patentansprüche erstellt

| Recherchenort | Abschlußdatum der Recherche | Prüfer |
|---|---|---|
| DEN HAAG | 5. Oktober 1994 | Goossens, A |

EPO FORM 1503 03.82 (P04C01)

Europäisches
Patentamt

**EUROPÄISCHER RECHERCHENBERICHT**

Nummer der Anmeldung

EP 94 11 3161

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 14, no. 437 (E-0980) 19. September 1990 & JP-A-02 170 513 (MATSUSHITA ELECTRIC IND CO LTD) 2. Juli 1990 * Zusammenfassung * --- | 6,8,11 | |
| A | EP-A-0 097 946 (SIEMENS AKTIENGESELLSCHAFT) * Zusammenfassung * * Abbildung 1 * --- | 12 | |
| D,A | EP-A-0 225 822 (COMPAGNIE EUROPEENNE DE COMPOSANTS ELECTRONIQUES LCC) * Zusammenfassung * * Abbildungen 1-13 * --- | 14 | |
| D,A | EP-A-0 017 556 (L.C.C.-C.I.C.E.-COMPAGNIE EUROPEENNE DE COMPOSANTS ELECTRONIQUES) * Abbildungen 2,3 * ----- | 15 | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 5. Oktober 1994 | Goossens, A |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P04C03)